# FASCICULE DE BREVET EUROPEEN

(11) **EP 0 443 953 B1**
(45) Date de publication et mention de la délivrance du brevet: **07.09.1994**
(21) Numéro de dépôt: 91400457.7
(22) Date de dépôt: 20.02.1991
(51) Int. Cl.: B61F 5/30

(54) **Bogie à pesée de charge pour véhicules de chemin de fer**
Drehgestell mit Lastmesseinrichtung für Schienenfahrzeuge
Bogie with load measuring device for railway vehicles

(30) Priorité: 21.02.1990 FR 9002118
(43) Date de publication de la demande: 28.08.1991
(73) Titulaire: SAMBRE ET MEUSE, F-59750 Feignies (FR)
(72) Inventeur: Lienard, Jean, F-59680 Ferrière la Petite (FR)
(74) Mandataire: Keib, Gérard

(56) Documents cités:
- EP-A- 0 035 443
- DE-A- 2 110 072

## Description

La présente invention concerne un bogie pour véhicules de chemin de fer comportant un dispositif de pesée de charge.

On sait qu'au-delà d'une vitesse de l'ordre de 100 km/heure, il est nécessaire pour les véhicules de chemin de fer d'adapter la puissance de freinage à la charge, faute de quoi à grande vitesse, le freinage risque d'être trop puissant si le véhicule est peu chargé ou inefficace dans le cas contraire, ce qui dans les deux cas peut avoir de graves inconvénients.

Pour adapter la puissance de freinage à la charge supportée par le bogie, il est connu de monter entre le châssis du bogie et les ressorts de suspension un dispositif de pesée de la charge comportant un détecteur de charge dit détendeur, sensible à la variation de charge des ressorts de suspension. Le détendeur émet ainsi un signal qui pilote la puissance du freinage appliquée à l'essieu.

Par ailleurs pour assurer un freinage efficace des véhicules de chemin de fer circulant à grande vitesse, il est très avantageux de prévoir des freins à disques, ces disques étant parallèles aux voiles des roues et fixés sur ces derniers.

Or la présence du détendeur avec ses annexes d'une part et du dispositif de freinage à disque d'autre part est difficilement compatible avec la réalisation de bogies comportant une suspension par ressorts en hélice situés à hauteur des roues associés à un système d'amortissement des oscillations, ainsi qu'il va être expliqué.

Dans le bogie connu sous le nom d'Y25, tel que normalisé par l'Union Internationale des Chemins de Fer (UIC) et qui comporte des essieux montés à coulisse et capables de déplacements verticaux, le système d'amortissement par friction des oscillations de l'essieu est aménagé au niveau des ressorts les plus proches de l'axe central du bogie. Le dispositif de pesée est disposé en relation avec l'autre groupe de ressorts, du côté opposé au précédent par rapport à l'essieu, c'est-à-dire vers l'extrémité des longerons du bogie et ce dispositif est intercalé entre le châssis du bogie et les ressorts de suspension. Sur un tel bogie, l'introduction d'un frein comportant des disques fixés sur le voile des roues, est très malaisée. En effet, l'espace disponible entre le voile de roue et le longeron du bogie est insuffisant pour permettre le passage des branches de la pince du frein à disque. La solution consistant à écarter l'un de l'autre les longerons, n'est pas acceptable car elle ne permettrait plus le passage au gabarit du bogie et par ailleurs elle interdirait l'utilisation d'essieux normalisés.

La solution consistant à disposer les appareils de freinage à l'extérieur du bogie, si elle est techniquement possible présenterait de sérieux inconvénients:
- elle rendrait difficile la reprise des efforts de freinage;
- elle placerait les appareils de frein, organes de sécurité, dans des zones particulièrement vulnérables.

Or l'un des buts de la présente invention est de pouvoir monter les appareils de frein le long de la traverse centrale du bogie. Mais dans ce cas, il est nécessaire de modifier l'emplacement du système amortisseur et de le disposer vers l'extérieur du bogie. Si cette solution est sans inconvénient pour le fonctionnement du bogie, elle ne favorise pas la mise en place du détendeur de pesée qui devrait être alors disposé sous le châssis vers l'axe central du bogie. Or le logement de cet appareil et de son alimentation ferait que la résistance structurelle du longeron serait fortement compromise, puisque le détendeur est en partie disposé dans un orifice pratiqué dans le longeron.

D'autres sujétions, très contraignantes également, apparaissent si l'on veut équiper de freins à disques et d'un détendeur de pesée un bogie connu du type Y25 mais à essieux orientables dans lequel, pour permettre l'orientabilité des essieux, le système d'amortissement a été doublé et disposé de part et d'autre de la boîte d'essieu. Dans ce cas, la mise en place du détendeur est rendue impossible par suite de la présence des chapeaux coiffant les ressorts en hélice et qui actionnent des poussoirs disposés radialement par rapport à l'essieu et s'opposant par friction à ses déplacements, ce qui assure l'amortissement des oscillations.

Diverses solutions ont été étudiées dans ce cas, mais elles présentent toutes l'inconvénient d'un manque de fiabilité dans la mesure des charges, soit que les efforts n'étaient que partiellement repris, soit qu'on mettait en oeuvre des montages compliqués pour transformer la course de la suspension en pesée de la charge sans nuire au comportement du bogie.

La présente invention vise à remédier à ces inconvénients et limitations en permettant le montage du dispositif de pesée de la charge à détendeur tant sur des bogies à essieux mobiles verticalement que sur des bogies à essieux orientables.

L'invention concerne ainsi un bogie pour véhicules de chemin de fer comprenant un châssis pourvu de deux longerons reliés par une traverse et entre lesquels sont montés les essieux, un dispositif de suspension de chaque essieu au moyen de ressorts hélicoïdaux placés de part et d'autre de son axe au moins un desdits ressorts situés d'un côté dudit essieu prenant appui d'une part sur une embase solidaire de la boîte d'essieu et d'autre part sur un chapeau relié au châssis du bogie par l'intermédiaire d'anneaux orientés obliquement de manière à appliquer le flanc du chapeau contre un poussoir dirigé vers l'essieu et qui appuie sur une glissière de la boîte d'essieu pour assurer l'amortissement de la suspension et un dispositif de pesée de charge à détendeur pour moduler la puissance de freinage.

Suivant l'invention ce dispositif est caractérisé en ce qu'il comporte un étrier de renvoi monté oscillant sur le longeron, cet étrier portant d'une part les tourillons d'accrochage des anneaux obliques reliés par ailleurs au chapeau coiffant l'un des ressorts de suspension, et d'autre part un plateau d'appui pour le détendeur du dispositif de pesée.

L'étrier permet ainsi le montage du détendeur de pesée à l'extrémité du longeron, ce qui est favorable à la résistance mécanique de celui-ci tout en permettant l'utilisation de freins à disques.

Dans une réalisation préférée de l'invention, l'axe d'articulation de l'étrier est orienté parallèlement à l'essieu, vers l'extrémité du longeron et il est porté par deux oreilles du longeron s'étendant de part et d'autre d'un système de ressorts de suspension.

Selon un autre mode de réalisation avantageux, l'étrier de renvoi comporte deux bras latéraux disposés au-dessous du chapeau et orientés obliquement vers le bas par rapport au plateau, les tourillons d'attache de l'anneau sur les bras de l'étrier sont disposés au-delà de l'axe des ressorts de suspension associés par rapport à l'articulation de l'étrier.

Complémentairement, selon une version intéressante de l'invention, l'étrier porte des moyens de guidage pour le chapeau coiffant le ou les ressorts de suspension, tandis que le plateau de cet étrier porte du côté opposé au détendeur un collet tubulaire engagé dans la partie supérieure du ressort intérieur du système de suspension.

D'autres particularités et avantages de l'invention résulteront encore de la description ci-après.

Aux dessins annexés donnés à titre d'exemple non limitatif:
- la figure 1 est une vue en élévation latérale d'un bogie à essieux non orientables aménagé conformément à l'invention;
- la figure 2 est une vue partielle à échelle agrandie, après coupe par le plan de symétrie longitudinal d'un longeron, montrant l'une des extrémités du bogie précédent;
- la figure 2A est un schéma à plus grande échelle d'une partie de la figure 2 en vue extérieure mais avec coupes partielles;
- la figure 3 est une coupe selon III-III de la figure 2 du dispositif de suspension;
- la figure 4 est une coupe selon IV-IV de la figure 5, de l'extrémité isolée du longeron;
- la figure 5 est une coupe selon V-V de la figure 4;
- la figure 6 est la vue extérieure de l'un des essieux d'un bogie à essieux orientables aménagé conformément à l'invention;
- la figure 7 montre à plus grande échelle après coupe par le plan de symétrie longitudinal, du longeron, le dispositif de suspension du bogie précédent;
- la figure 8 est une vue en plan à petite échelle d'un bogie à essieu fixe et du dispositif de freinage à disque correspondant.

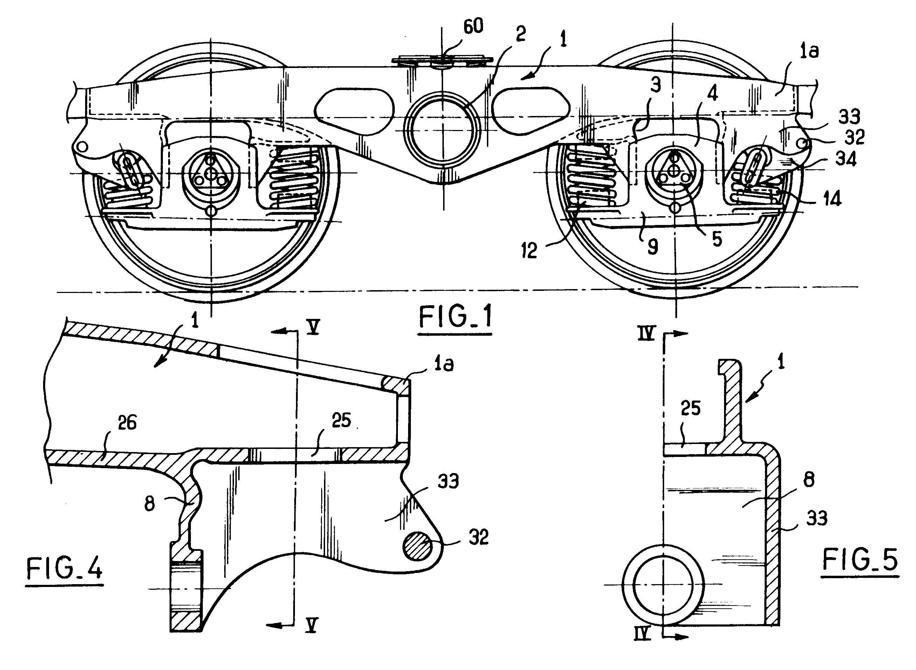

Dans la réalisation particulière de l'invention visée aux figures 1 à 5, le bogie représenté est du type Y25 à essieu non orientable et il est supposé muni de freins à disque.

Ce bogie comprend de façon connue deux longerons 1 solidarisés par une traverse 2. Au voisinage de chaque extrémité le longeron 1 porte une chape 3 servant au logement de la boîte d'essieu 4 dans laquelle est monté l'essieu schématisé en 5. La boîte d'essieu 4 peut coulisser dans la chape 3 le long d'une paroi de guidage 6 de celle-ci et d'un poussoir 7 logé dans la paroi en regard 8 de ladite chape. La boîte d'essieu 4 présente deux parois latérales 20, 21 formant glissière respectivement en contact glissant avec la paroi 6 et le poussoir 7, elle est d'autre part prolongée vers le bas par une embase 9 de chaque côté de laquelle est montée une paire de ressorts de suspension hélicoïdaux et coaxiaux 11, 12, et 13, 14 respectivement, ces derniers étant montés à la partie extérieure du longeron 1. Les ressorts 11, 12 sont respectivement guidés par des collets 15 et 16 solidaires de l'embase 9 et du longeron 1.

Les ressorts 13 et 14 sont guidés par un collet inférieur 17 solidaire de l'embase 9 et par un chapeau 18 dont la paroi latérale 18a tournée vers l'essieu 5 appuie sur le poussoir 7 dont la tête épanouie 7a est appliquée sur la glissière 21 de la boîte d'essieu 4.

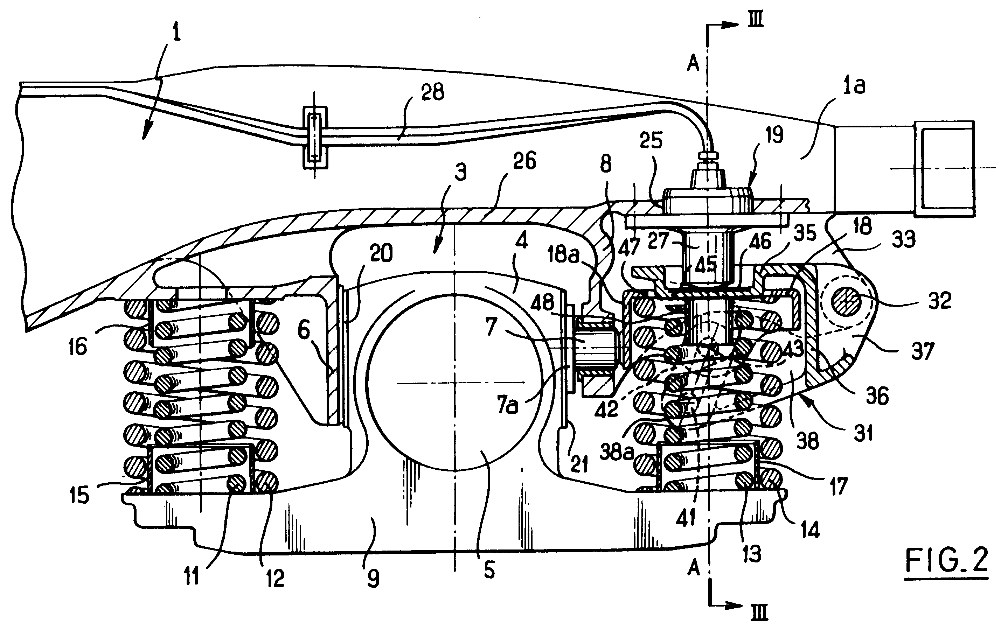

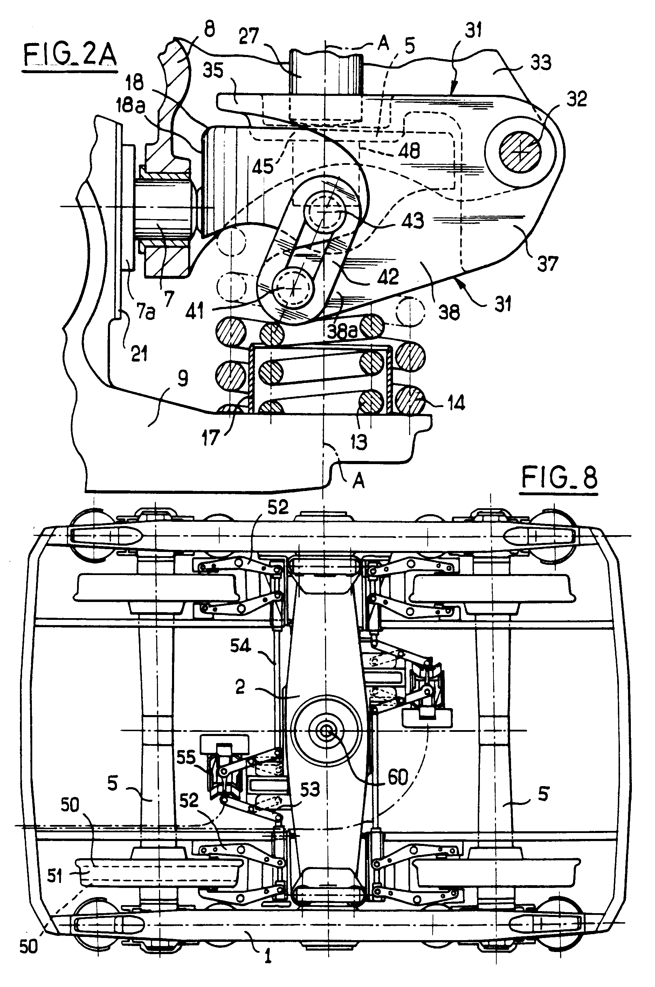

On voit encore sur les figures 1 et 2 le détendeur de pesée 19 engagé dans un perçage 25 du fond 26 du longeron 1 et fixé à celui-ci par des boulons ou analogues non représentés. Le capteur 27 du détendeur 19 fait saillie au-dessous du fond 26 vers la paire de ressorts 13, 14. Le détendeur 19 est relié par une canalisation 28 au dispositif de réglage de la puissance de freinage selon une disposition connue. Le détendeur de pesée 19 est d'un type quelconque parmi ceux utilisés dans la technique des chemins de fer.

Conformément à la présente invention, la partie antérieure 1a du longeron 1 est munie d'un étrier oscillant 31 articulé au longeron par un axe 32 disposé entre deux oreilles 33 prolongeant les faces latérales du longeron 1, formant chape et raccordées du côté de l'essieu 5 à la paroi transversale 8 issue du longeron 1.

L'étrier 31 est une pièce creuse comportant vers le longeron 1 un plateau 35 qui au repos est sensiblement parallèle au fond 26 de ce longeron, un fond raidisseur 36 portant la chape 37 de liaison à l'axe 32 et des flancs latéraux 38 formant la partie inférieure d'un bras 38a disposé au-dessous du chapeau 18 et qui s'étend au-delà de l'axe AA commun aux ressorts 13, 14 et au détendeur 19. Chaque bras 38a porte en deçà de l'axe AA par rapport à l'essieu 5 un tourillon 41 pour l'accrochage d'un anneau oblique 42 qui est également engagé à sa partie supérieure dans un second tourillon 43 porté par le chapeau 18, le tourillon 43 étant sensiblement situé sur l'axe AA.

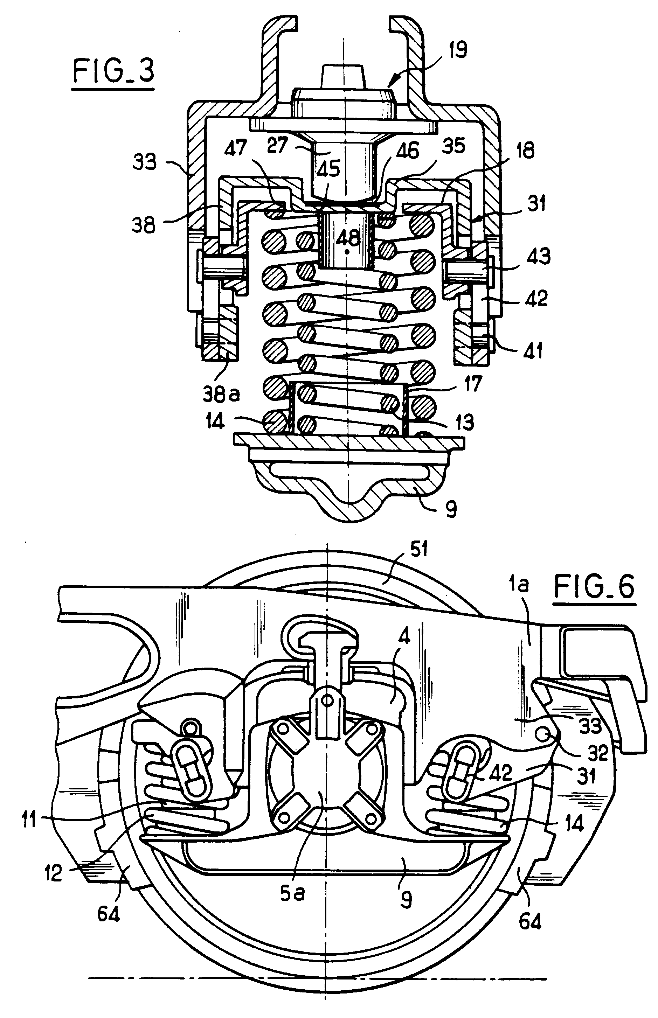

Comme on le voit sur les figures 2 et 3, le plateau supérieur 35 de l'étrier 31 présente une cuvette 45 qui reçoit le capteur 27 du détendeur de pesée, la surface de cette cuvette 45 étant munie d'une pastille durcie 46. La cuvette 45 est engagée dans un orifice central 47 du chapeau 18 et elle est munie d'un collet 48 qui pénètre dans le ressort 13 et sert au guidage de celui-ci. Le diamètre de l'ouverture 47 du chapeau 18 est tel que seul le ressort extérieur 14 prenne normalement appui sur ce chapeau. Le ressort intérieur 13 est situé en regard de la cuvette 46 du plateau 35 mais en position de tare du wagon il n'y a pas contact entre le ressort 13 et la cuvette 46 comme il sera vu plus loin.

On voit ainsi sur les figures 2, 2A et 3 que l'étrier 31 est ouvert vers la boîte d'essieu 4 pour rendre libre le débattement du chapeau 18 et que son profil est aménagé pour guider le chapeau 18 dans ce débattement ainsi que le ressort intérieur 13 de la suspension grâce au collet 48.

L'obliquité du bras 38 de l'étrier 31 par rapport au plateau 35 et l'extension de ce bras au-delà de l'axe AA sont telles que l'anneau de liaison 42 présente sensiblement la même longueur et la même obliquité que dans le cas d'un bogie classique, par exemple du type Y25 et que le détendeur de pesée supporte environ 1/8 de la charge.

Les articulations et degrés de liberté des pièces ainsi prévues par l'invention apparaissent clairement sur la figure 3, tandis que l'aménagement de la partie antérieure du longeron 1 pour recevoir les oreilles 33 est clairement montré aux figures 4 et 5 représentant en coupe l'extrémité du longeron.

Le système de liaison entre le chapeau 18 et le longeron 1 par l'intermédiaire de l'étrier oscillant 31 permet ainsi, même dans le cas d'un freinage par disque, de placer le détendeur de pesée 19 à la partie antérieure du longeron. Ceci présente le gros avantage d'éviter une diminution de la résistance de ce longeron étant donné que dans le fond 36 de celui-ci est pratiqué le perçage 25 pour la fixation du détendeur 19. On notera d'ailleurs que la rigidité de la partie antérieure du longeron est renforcée par les oreilles 33 servant au montage de l'axe 32.

Le renvoi du mouvement assuré par l'étrier 31 peut d'autre part être rendu tel que les conditions de fonctionnement de la suspension et du détendeur de pesée sont comparables à celles existant sur un bogie classique du type Y25 équipé d'un système de frein à sabot.

La suspension du bogie Y25 est à double flexibilité, ceci étant obtenu par des hauteurs différentes des ressorts coaxiaux. Il s'ensuit que sous la tare du wagon, seuls les ressorts extérieurs tels que 12 et 14 de la suspension travaillent. Dans ce cas, la transmission de la charge au détendeur s'opère par la chaîne, chapeau 18, anneaux 42, tourillons 41 fixés sur les bras 38 de l'étrier de liaison 31 articulé sur l'axe 32 et qui sert de renvoi vers le détendeur de pesée 19.

En charge du wagon, au processus de transmission des efforts engendrés par les ressorts extérieurs 12, 14 vient s'ajouter en direct, l'action des ressorts intérieurs 11, 13, ce dernier entrant en contact avec le plateau 35 de l'étrier de liaison 31 et étant guidé par le collet 48.

Compte tenu, du fait que le système de détendeur de pesée est situé dans l'axe des ressorts, il n'y a aucune modification dans la transmission de l'effort et de ce fait les dispositifs classiques peuvent être utilisés.

Sur la figure 8, on a montré le montage de freins à disque sur roue pour le bogie précédent. Les disques de freinage 50 sont plaqués sur les voiles des roues 51 et serrés par des mâchoires 52 commandées par des tringleries 53, 54 à partir d'un maître-cylindre 55 fixé sur la traverse 2 au voisinage de l'axe de pivotement 60 de celle-ci. L'invention permet ainsi, même dans le cas du freinage à disque, une organisation rationnelle et sûre de la commande de ce freinage.

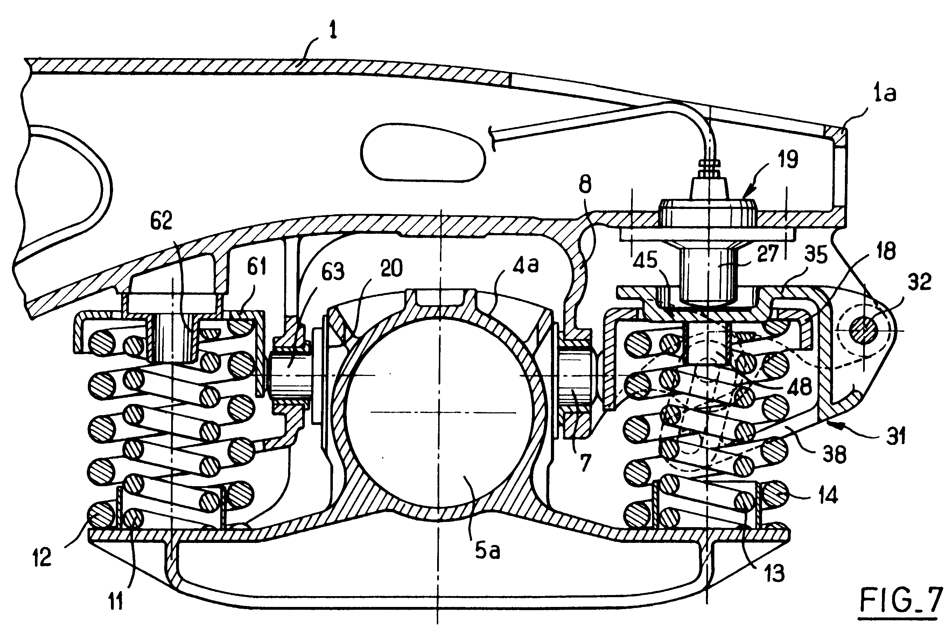

Aux figures 6 et 7 on a montré l'application de l'invention à un bogie du type à essieux orientables par exemple connu sous les références Y25 ORLSSm ou Y25 ORLSm.

Dans ce cas le groupe de ressorts 11, 12 situé du côté de l'essieu orientable 5a reçoit du côté de la traverse 2 un dispositif amortisseur comprenant un chapeau 61 disposé autour d'un collet de guidage 62 du ressort intérieur 11. Le chapeau 61 appuie sur un poussoir 63 qui est en contact avec la glissière 20 de la boîte d'essieu orientable 4a. Le freinage est assuré par des sabots de roue 64.

La partie de la suspension disposée vers l'extrémité du longeron 1 est la même que celle illustrée aux figures 2 et 3 notamment. L'invention est ainsi applicable aux essieux orientables et permet le montage de freins à disques, ces derniers devant toutefois être prévus non plus sur les roues mais montés en retrait sur l'essieu en raison de l'encombrement du chapeau 61 situé vers l'essieu et qui ne permettrait plus le montage des mâchoires de serrage telles que 52 de la figure 8 au cas où l'on voudrait placer les disques de freinage sur la roue.

Le dispositif d'étrier oscillant prévu par l'invention assure donc une extension du domaine d'application des bogies du type Y25 à essieux fixes ou mobiles en rendant compatible sur ces bogies l'aménagement d'un détendeur de pesée et d'un système de freinage par disque.

Il est évident que l'invention n'est pas limitée aux réalisations décrites et qu'on peut y apporter des variantes notamment en ce qui concerne le profil des pièces telles que l'étrier de renvoi.

## Revendications

1. Bogie pour véhicules de chemin de fer comprenant un châssis pourvu de deux longerons (1) reliés par une traverse (2) et entre lesquels sont montés les essieux (5), un dispositif de suspension de chaque essieu au moyen de ressorts hélicoïdaux (11, 12, 13, 14) placés de part et d'autre de son axe, au moins un desdits ressorts (13, 14) situés d'un côté dudit essieu (5) prenant appui d'une part sur une embase (9) solidaire de la boîte d'essieu (4) et d'autre part sur un chapeau (18) relié au châssis du bogie par l'intermédiaire d'anneaux (42) orientés obliquement de manière à appliquer le flanc (18a) du chapeau (18) contre un poussoir (7) dirigé vers l'essieu (5) et qui appuie sur une glissière (21) de la boîte d'essieu (4) pour assurer l'amortissement de la suspension et un dispositif de pesée de charge à détendeur (19) pour moduler la puissance de freinage, caractérisé en ce qu'il comporte un étrier de renvoi (31) monté oscillant sur le longeron (1), cet étrier portant d'une part les tourillons (41) d'accrochage des anneaux obliques (42) reliés par ailleurs au chapeau (18) coiffant l'un des ressorts de suspension (14), et d'autre part un plateau d'appui (35) pour le détendeur (19) du dispositif de pesée.

2. Bogie conforme à la revendication 1, caractérisé en ce que l'axe d'articulation (32) de l'étrier (31) est orienté parallèlement à l'essieu.

3. Bogie conforme à la revendication 1 ou 2, caractérisé en ce que l'axe d'articulation (32) de l'étrier (31) est disposé vers l'extrémité (1a) du longeron (1).

4. Bogie conforme à l'une des revendications 1, 2 ou 3, caractérisé en ce que l'axe d'articulation (32) de l'étrier est porté par deux oreilles (33) du longeron (1) s'étendant de part et d'autre d'un système de ressorts de suspension (13, 14).

5. Bogie conforme à l'une des revendications 1 à 4, caractérisé en ce que l'étrier de renvoi (31) comporte deux bras latéraux (38) disposés au-dessous du chapeau (18) et orientés obliquement vers le bas par rapport au plateau (35).

6. Bogie conforme à la revendication 5, caractérisé en ce que les tourillons d'attache (41, 43) de l'anneau (42) sur les bras (38) de l'étrier (31) sont disposés au-delà de l'axe A-A des ressorts de suspension (13, 14) associés par rapport à l'articulation de l'étrier.

7. Bogie conforme à l'une des revendications 1 à 6, caractérisé en ce que l'étrier (31) porte des moyens de guidage pour le chapeau (18) coiffant le ou les ressorts de suspension (13, 14).

8. Bogie conforme à la revendication 7, caractérisé en ce que les moyens de guidage du chapeau (18) des ressorts (13, 14) de suspension sont constitués par le pourtour d'une cuvette (45) ménagée dans le plateau (35) de l'étrier (31) pour le capteur (27) du détendeur (19), cette cuvette (45) étant engagée dans un orifice central (47) dudit chapeau (18).

9. Bogie conforme à l'une des revendications 1 à 8, caractérisé en ce que le plateau d'appui (35) de l'étrier (31) porte du côté opposé au détendeur un collet tubulaire (48) engagé dans la partie supérieure du ressort intérieur (13) du système de suspension.

10. Bogie conforme à l'une des revendications 1 à 9 et caractérisé en ce qu'il comporte des disques de freinage (50) parallèles aux voiles des roues (51).

11. Bogie conforme à la revendication 10, caractérisé en ce que le maître-cylindre (55) de commande des mâchoires (52) du système de freinage à disques est monté sur la traverse (2), vers la partie centrale de celle-ci.

12. Bogie conforme à l'une des revendications 1 à 11, du genre à essieu orientable, caractérisé en ce qu'il comprend de chaque côté de l'essieu (5a) un système de suspension à chapeau (18, 61) et poussoir (7, 63), l'étrier articulé (31) et le détendeur de pesée (19) étant disposés du côté opposé à la traverse par rapport à l'essieu (5a).

## Claims

1. A railway vehicle bogie comprising a chassis provided with two longitudinal members (1) connected by a cross-member (2) and having the axles (5) mounted between them, a suspension device for each axle by means of coil springs (11, 12, 13, 14) disposed on either side of its axis, at least one of said springs (13, 14) situated on one side of said axle (5) bearing, on the one hand, on a bolster (9) connected to the axle box (4) and, on the other hand, on a cap (18) connected to the bogie chassis by means of rings (42) directed obliquely so as to apply the flank (18a) of the cap (18) against a thrust member (7) directed towards the axle (5) and which bears on a guide (21) of the axle box (4) in order to damp the suspension and a load weighing device comprising a pressure reducing means (19) for modulating the brake power, characterised in that it comprises a transmission yoke (31) mounted to oscillate on the longitudinal member (1), said yoke carrying, on the one hand, the journals (41) for securing the oblique rings (42) which are also connected to the cap (18) covering one of the suspension springs (14) and, on the other hand, a support plate (35) for the pressure reducing means (19) of the weighing device.

2. A bogie according to claim 1, characterised in that the pivot axis (32) of the yoke (31) is directed parallel to the axle.

3. A bogie according to claim 1 or 2, characterised in that the pivot axis (32) of the yoke (31) is disposed towards the end (1a) of the longitudinal member (1).

4. A bogie according to any one of claims 1 to 3, characterised in that the pivot axis (32) of the yoke is carried by two lugs (33) of the longitudinal member (1) extending on either side of a suspension spring system (13, 14).

5. A bogie according to any one of claims 1 to 4, characterised in that the transmission yoke (31) comprises two lateral arms (38) disposed beneath the cap (18) and directed obliquely downwards relatively to the plate (35).

6. A bogie according to claim 5, characterised in that the journals (41, 43) securing the ring (42) on the arms (38) of the yoke (31) are disposed beyond the axis (A-A) of the associated suspension springs (13, 14) relatively to the yoke articulation.

7. A bogie according to any one of claims 1 to 6, characterised in that the yoke (31) carries guide means for the cap (18) covering the suspension spring or springs (13, 14).

8. A bogie according to claim 7, characterised in that the means for guiding the cap (18) of the suspension springs (13, 14) comprise the periphery of a cup (45) formed in the plate (35) of the yoke (31) for the sensor (27) of the pressure reducing means (19), said cup (45) being engaged in a central orifice (47) of the cap (18).

9. A bogie according to any one of claims 1 to 8, characterised in that the support plate (35) for the yoke (31) bears a tubular collar (48) on the side remote from the pressure reducing means, said tubular collar being engaged in the top part of the inner spring (13) of the suspension system.

10. A bogie according to any one of claims 1 to 9, characterised in that it comprises brake discs (50) parallel to the centres of the wheels (51).

11. A bogie according to claim 10, characterised in that the master cylinder (55) controlling the jaws (52) of the disc brake system is mounted on the cross-member (2) towards the central part thereof.

12. A bogie according to any one of claims 1 to 11, of the swivelling axle type, characterised in that it comprises on each side of the axle (5a) a suspension system comprising a cap (18, 61) and thrust member (7, 63), the articulated yoke (31) and the weighing pressure reducing means (19) being disposed on the side remote from the cross-member relatively to the axle (5a).

## Patentansprüche

1. Fahrgestell für Schienenfahrzeuge mit einem Chassis, das mit zwei über einen Querträger (3) miteinander verbundenen Längsträgern (1) versehen ist, und zwischen denen die Radachsen (5) angebracht sind, mit einer Vorrichtung zum Aufhängen jeder Radachse mittels beiderseits dieser Achse angeordneten Schraubenfedern (11, 12, 13, 14), wobei zumindest eine der an einer Seite der Radachse (5) angeordneten Federn (13, 14) sich einerseits auf einer gemeinsam mit der Nabenbüchse (4) ausgebildeten Grundplatte (9) und andererseits auf einer Kappe (18) abstützt, die unter Zwischenschaltung eines Rings (42) mit dem Chassis des Fahrgestells verbunden ist, der derart schräg angeordnet ist, daß er an der Flanke (18a) der Kappe (18) gegen einen Stößel (7) anliegt, der gegen die Radachse (5) gerichtet ist und auf einer Gleitführung (21) der Nabenbüchse (4) anliegt, um die Dämpfung der Aufhängung zu gewährleisten, und mit einer Lastausgleich-Druckminderervorrichtung (19) zum Modulieren der Bremskraft, gekennzeichnet durch einen Rückstellbügel (31), der auf dem Längsträger (1) schwingend angebracht ist und einerseits die Lagerzapfen (41) zum Aufhängen der schrägverlaufenden Ringe (42), die überdies mit der Kappe (18) verbunden sind, die eine der Aufhängungsfedern (14) bedeckt, und andererseits eine Stützplatte (35) für den Druckminderer (19) der Lastausgleichsvorrichtung umfaßt.

2. Fahrgestell nach Anspruch 1, dadurch gekennzeichnet, daß die Drehachse (32) des Bügels (31) parallel zur Radachse ausgerichtet ist.

3. Fahrgestell nach Anspruch 1 oder 2, dadurch gekennzeichnet, daß die Drehachse (32) des Bügels (31) am Ende (1a) des Längsträgers (1) angeordnet ist.

4. Fahrgestell nach einem der Ansprüche 1, 2 oder 3, dadurch gekennzeichnet, daß die Bügeldrehachse (32) durch Tragösen (33) des Längsträgers (1) getragen ist, die sich beidseits eines Aufhängungsfedersystems (13, 14) erstrecken.

5. Fahrgestell nach einem der Ansprüche 1 bis 4, dadurch gekennzeichnet, daß der Rückstellbügel (31) zwei Seitenarme (38) umfaßt, die unterhalb der Kappe (18) angeordnet und in Bezug auf die Platte (35) schräg nach unten ausgerichtet sind.

6. Fahrgestell nach Anspruch 5, dadurch gekennzeichnet, daß die Befestigungslagerzapfen (41, 43) des Rings (42) auf den Armen (38) des Bügels (31) jenseits der Achse A-A der in Bezug auf die Bügeldrehachse miteinander verbundenen Aufhängungsfedern (13, 14) angeordnet sind.

7. Fahrgestell nach einem der Ansprüche 1 bis 6, dadurch gekennzeichnet, daß der Bügel (31) Führungseinrichtungen für die die Aufhängungsfedern (13, 14) bedeckende Kappe (18) tragen.

8. Fahrgestell nach Anspruch 7, dadurch gekennzeichnet, daß die Führungseinrichtungen der Kappe (18) für die Aufhängungsfedern (13, 14) aus dem Umkreis einer Wanne (45) besteht, die in der Platte (35) des Bügels (31) für den Meßfühler (27) des Druckminderers (19) ausgespart ist, wobei die Wanne (45) sich in eine zentrale Öffnung (47) der Kappe (18) hineinerstreckt.

9. Fahrgestell nach einem der Ansprüche 1 bis 8, dadurch gekennzeichnet, daß die Stützplatte (35) für den Bügel (31) auf der dem Druckminderer gegenüberliegenden Seite einen rohrförmigen Kragen (48) trägt, der in den oberen Teil der Innenfeder (13) des Aufhängungssystems eingreift.

10. Fahrgestell nach einem der Ansprüche 1 bis 9, gekennzeichnet durch parallel zu den Abdeckungen der Räder (51) verlaufende Bremsscheiben (50).

11. Fahrgestell nach Anspruch 10, dadurch gekennzeichnet, daß der Steuerhauptzylinder (55) für die Bremsbacken (52) des Scheibenbremssystems am zentralen Teil des Querträgers (2) angebracht ist.

12. Fahrgestell nach einem der Ansprüche 1 bis 11, mit einer schwenkbaren Radachse, gekennzeichnet durch ein Aufhängungssystem mit einer Kappe (18, 61) und einem Stößel (7, 63) an jeder Seite der Radachsen (5a), wobei der schwenkbare Bügel (31) und der Ausgleichsdruckminderer (19) an der dem Querträger in bezug auf die Radachse (5a) gegenüberliegenden Seite angeordnet sind.
